# EUROPEAN PATENT APPLICATION

(11) **EP 1 387 530 A1**
(43) Date of publication of application: **04.02.2004**
(21) Application number: 02769220.1
(22) Date of filing: 08.05.2002
(51) Int. Cl.: H04L 12/46, H04L 12/28

(54) **RADIO COMMUNICATION SYSTEM, CONTROL STATION, COMMUNICATION APPARATUS, COMMUNICATION CONTROL METHOD, RADIO COMMUNICATION METHOD, AND COMMUNICATION CONTROL PROGRAM**

(30) Priority: 08.05.2001 JP 2001177787
(71) Applicant: Sony Corporation, Tokyo 141-0001 (JP)
(72) Inventor: SUGAYA, Shigeru, c/o Sony Corporation, Tokyo 141-0001 (JP); IWASAKI, Jun, c/o Sony Corporation, Tokyo 141-0001 (JP); KOYAMA, Akihiro, c/o Sony Corporation, Tokyo 141-0001 (JP); ASAI, Hisato, c/o Sony Corporation, Tokyo 141-0001 (JP); AKAHANE, Masaaki, c/o Sony Corporation, Tokyo 141-0001 (JP)
(74) Representative: Nicholls, Michael John
(86) International application number: PCT/JP2002/004488
(87) International publication number: WO 2002/091683

(57) **Abstract**

In a radio communications system comprising a first radio system and a second radio system different from the first radio system, the control station of the first radio system controls communications between communication devices belonging to the second communications system, with a control signal of the first communications system. Thus, by using both systems of the radio communications system having the fist radio system and the different second radio system, it is able to avoid collision between information transmission and to improve transmission efficiency.

## Description

### Technical Field

This invention relates to a radio communications system, control station, communication device, communication control method, radio communication method, and communication control program which are used in a digital radio communications system.

### Background Art

Recent years, an information transmission method using a small-scale network such as a wireless LAN has come into actual use, and connections are generally established by using an access point (AP) for controlling small-scale terminals, without large-scale base station equipment.

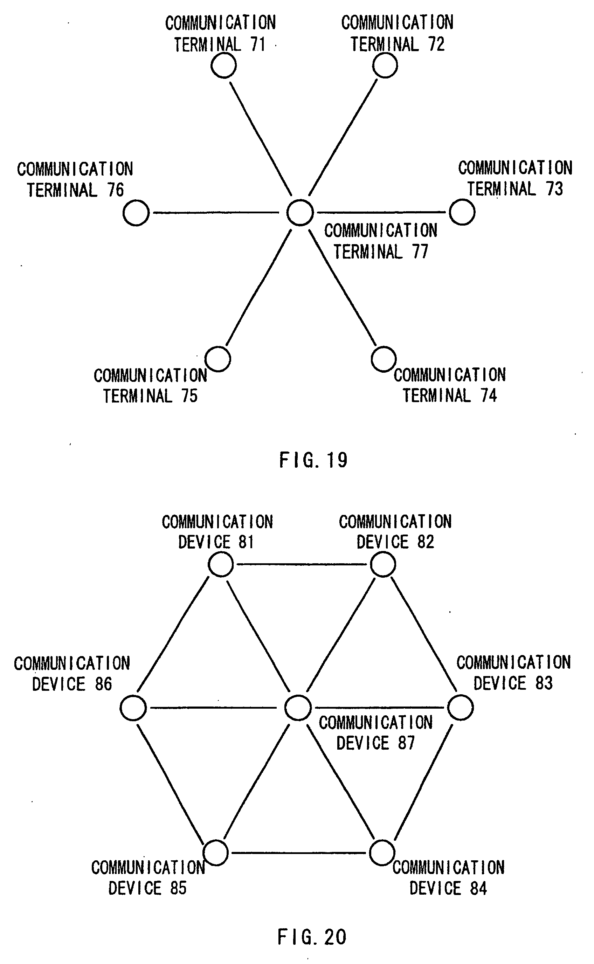

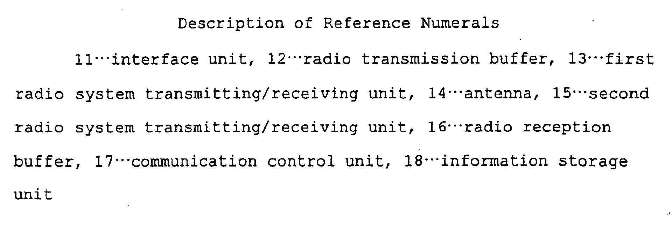

For instance, such a small-scale network is so-called star-like network in which a control station 77 is placed in the center of the network and communication terminals 71 - 76 are connected to the control station 77, as shown in Fig. 19. Therefore, in this formation, each communication terminal 71 - 76 communicates with the control station 77 functioning as an access point.

When information transmission is performed via such a network, information is once transmitted through an up-link to the control station 77 from a communication terminal that is an information transmitter, and then the information is transmitted to a communication terminal that is an information receiver from the control station 77 through a down-link.

Besides, communication devices which establish connections, so-called ad hoc network, are considered in which arbitrary communication devices 81 - 87 are mutually connected, without an access point, as shown in Fig. 20. In this ad hoc network, each communication device 81 - 87 can connect to its neighboring communication devices with which the communication device 81 - 87 can directly communicate, so as to perform communications. Fig. 20 shows that the communication device 81 can directly communicate with the communication device 82, the communication device 86 and the communication device 87, but it is a hidden terminal for the others, that is, the communication device 83, the communication device 84 and the communication device 85 because it can not communicate with them.

A conventional small-scale network such as a wireless LAN is provided with an access point, so that communication devices maintain their mutual connectivity by communications therebetween in the network via the access point.

However, because such a method is generally and widely employed that an up-link is used from a communication terminal that is an information transmitter to an access point and a down-link is used from the access point to a communication terminal that is an information receiver, both of up-link and down-link must be used even for the information transmission between neighboring communication terminals, which exists a problem that the transmission efficiency deteriorates.

In the ad hoc network in which an access point is not required, one transmission line between communication terminals can be used efficiency; however, such a danger exists that transmission information from a communication device that is a desired information transmitter and information sent from another device that is not capable of recognizing the desired information transmitter would collide because of so-called hidden terminal problem, and so some control is needed.

Therefore, at present, control called RTS/CTS control has been proposed in which neighbors are informed that a transmission line is going to be used, before information transmission. This control, however, causes complexity of the control, which is a problem.

Therefore, it is desired to make the best use of the advantages of both of above-mentioned small-scale network and ad hoc network, to expand the range of utilization by using both networks in common

For example, the Japanese Patent Laid Open No. 275237/96 discloses such a technique that a mobile communications system is used for a request for information and a wireless LAN system is used for reception of information by a combination of the mobile communications system such as PHS (Personal Handyphone System) and the wireless LAN (Local Area Network) system capable of performing high-speed radio transmission. This technique, however, has a problem in that the format of information should be changed between the mobile communications system and the wireless LAN system with a converting device or the like.

In addition, the Japanese Patent Laid Open No. 274776/96 discloses such an address management method for a radio communications system in which a communication terminal has communication interfaces physically different from each other for plural radio channels to simultaneously perform communications on the plural radio channels which use different addresses. This method, however, needs a condition that the mobile communications system and the wireless LAN system physically connect to each other.

### Description of the Invention

Considering above-mentioned respects, this invention aims to propose a radio communications system, control station, communication device, communication control method, radio communication method, and communication control program which are capable of improving transmission efficiency by using both systems of a small-scale radio network having a control station and a small-scale network without a control station, avoiding collision between information transmission.

The radio communications system according to the present invention is characterized by comprising a first radio system and a second radio system different from the first radio system. The control station of the first radio system controls communications of communication devices which belong to the second communications system, with control signals of the first communications system.

Further, the control station of this invention is a control station of a first radio communications system of a radio communications system comprising the first radio system and a second radio system different from the first radio system, and is characterized by controlling communications of communication devices which belong to the second communications system, with control signals of the first communications system.

Still further, the communication device of this invention is a communication device which can access a first communications system of which the network is controlled by the control station and the second communications system having a different network formation from the first communications system, and the communication device is characterized by comprising a channel-allocation requesting means for transmitting a channel-allocation request for the second communications system to the control station based on network information given from the control station which controls the first communications system, a receiving means for receiving allocated-channel information of the second communications system allocated by the control station in response to the channel-allocation request, and a transmitting means for performing information transmission via the second communications system based on the allocated-channel information.

Still further, the communication device of this invention is a communication device which can access a first communications system of which the network is controlled by the control station, and a second communications system having a different network formation from the first communications system, and the communication device is characterized by comprising a first communication means for performing communications via the first communications system, a second communication means for performing communications via the second communications system, and a transmission control means for receiving via the first communication means network information transmitted from the control station which controls the first communications system and performing information transmission via the second communications system based on the network information.

Still further, the communication control method of this invention is a communication control method of the control station of a first radio communications system in a radio communications system comprising the first radio system and a second radio system different from the first radio system, and the communication control method is characterized by comprising a step of receiving a channel-allocation request from a communication device which belongs to the second radio communications system, a step of searching for available channels in response to the channel-allocation request, and a step of giving a notification of allocated-channel information of the second radio communications system obtained by the search, via the first radio system.

Still further, the communication control method of this invention is a communication control method of the control station of a second radio communications system in a radio communications system comprising a first radio system and the second radio system different from the first radio system, and the communication control method is characterized by comprising a step of receiving allocated-channel information of the second radio communications system given from the control station of the first radio communications system via the first radio communications system, and a step of notifying plural communication devices of the received allocated-channel information via the second radio communications system.

Still further, the radio communication method of this invention is a radio communication method for performing communications between transmission devices in first and second radio systems by using the first radio system of which the network is controlled by the control station and the second radio system having a different network formation from the first radio system, and the radio communication method is characterized by comprising a step at which the control station notifies communication devices of network information via the first communications system, and a step at which the communication devices perform information transmission via the second communications system base on the network information.

Still further, the communication control program of this invention is a communication control program of the control station of a second radio communications system in a radio communications system comprising a first radio system and the second radio system different from the first radio system, and the communication control program is characterized by comprising a step of receiving allocated-channel information of the second radio communications system given from the control station of the first radio communications system via the first radio communications system, and a step of notifying plural communication devices of the received allocated-channel information via the second radio communications system.

Still further, the radio communication program of this invention is a radio communication program for performing communications between transmission devices in first and second radio systems by using the first radio system of which the network is controlled by the control station and the second radio system having a different network formation from the first radio system, and the radio communication program is characterized by comprising a step at which the control station notifies communication devices of network information via the first communications system, and a step at which the communication devices perform information transmission via the second communications system based on the network information.

According to the present invention, the radio communications system is composed of a first radio system of which the network is controlled by the control station and a second communications system in which communications are directly performed between communication devices, so that the radio network can be effectively controlled by using the first radio system and further radio transmission can be also effectively performed by using the second radio system.

### Brief Description of the Drawings

Fig. 1 is a schematic diagram showing a network formation employed for a radio transmission method of the present invention.
Fig. 2 is a schematic diagram showing a network formation employed for a radio transmission method of the present invention.
Fig. 3 is a block diagram showing the construction of a radio transmission device of the embodiment of the present invention.
Fig. 4 is a sequence diagram of allocation of the second radio system.
Fig. 5 is diagrams showing frame formats in which transmission using the second radio system is adaptively added to the first radio system.
Fig. 6 is diagrams showing frame formats for a case in which devices composing the network use the first radio system while the second radio system is used.
Fig. 7 is a diagram showing a case of using the first radio system with the frame format shown in Fig. 6(a).
Fig. 8 is a diagram showing an example of a case of using the first radio system with the frame format shown in Fig. 6(b).
Fig. 9 is a diagram showing an example of a case of using the first radio system with the frame format shown in Fig. 6(c).
Fig. 10 is a diagram showing an example of a case of using the first radio system with the frame format shown in Fig. 6(d).
Fig. 11 is diagrams showing frame formats of a case where devices composing the network uses the first radio system while the second radio system is used.
Fig. 12 is a diagram showing an example of a case of using the first radio system with the frame format shown in Fig. 11(a).
Fig. 13 is a diagram showing an example of a case of using the first radio system with the frame format shown in Fig. 11(b).
Fig. 14 is a diagram showing an example of a case of using the first radio system with the frame format shown in Fig. 11(c).
Fig. 15 is a diagram showing an example of a case of using the first radio system with the frame format shown in Fig. 11(d).
Fig. 16(a) is a diagram that represents use of the first radio system which affects the second radio system. Fig. 16(b) is a diagram that represents use of the first radio system which does not affect the second radio system. Fig. 16(c) is a diagram that represents use of the first radio system for a case where influences on the second radio system are considered individually.
Fig. 17 is a diagram showing an example of modulation processing of an ultra wideband signal.
Fig. 18 is a diagram showing an example of demodulation processing of an ultra wideband signal.
Fig. 19 is a diagram showing an example of the construction of a small-scale network having a control station.
Fig. 20 is a diagram showing an example of the construction of an ad hoc small-scale network.

### Best Mode for Carrying out the Invention

The present invention uses a first communications system of which the network is controlled by a control device and a second communications system having a different network formation from the first communications system.

Note that, the first communications system and the second communications system have different physical layers. For a specific example, the first communications system uses a physical layer of the IEEE802.11 standards, while the second communications system uses a physical layer of the UWB (Ultra Wideband) communication which is a communication method using pulses.

Further, the first communications system and the second communications system use different signal waveforms. For a specific example, a signal which is used by the first communications system is a signal of sign wave, while a signal which is used by the second communications system is a signal of pulse wave.

Furthermore, the first communications system and the second communications system use different transmission bandwidths. For a specific example, the first communications system uses the transmission bandwidth of 10 Mbps, while the second communications system uses the transmission bandwidth of 100 Mbps.

In the present invention, the control station existing in the first communications system controls not only the communication devices belonging to the first communications system but also the communication devices belonging to the second communications system, by using a beacon signal (notification signal). The communication devices belonging to the second communications system communicate with other communication devices based on the control information. A different control station may be provided in the second communications system but it is not necessary essential.

An embodiment of the present invention will be described in detail hereinafter with reference to the attached drawings.

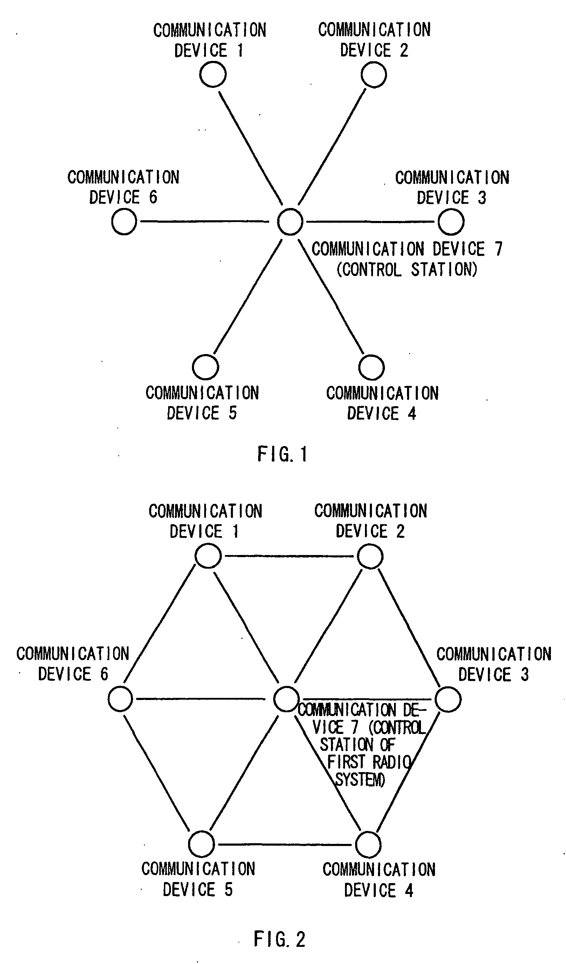

Fig. 1 and Fig. 2 are drawings showing network formations used for a radio transmission method of the present invention.

Fig. 1 represents an example of a network formation in a small-scale radio network (first communications system) having a control station. In this figure, a communication device 7 in the network functions as the control station to control communication devices 1 - 6 that exist around it.

Fig. 2 represents an example of a network formation in a small-scale radio network (second communications system) that does not have a control station. In this figure, it includes all communication devices 1 - 6 composing the network, and a communication device 7, which has a function capable of working as the control station of the first radio system, and direct transmission is performed between the communication devices, not via the control station.

Besides, the information transmission that uses the first communications system shown in Fig. 1 also may allows the direct communications, not via the control station, in the same way as the information transmission method employing the second communications system.

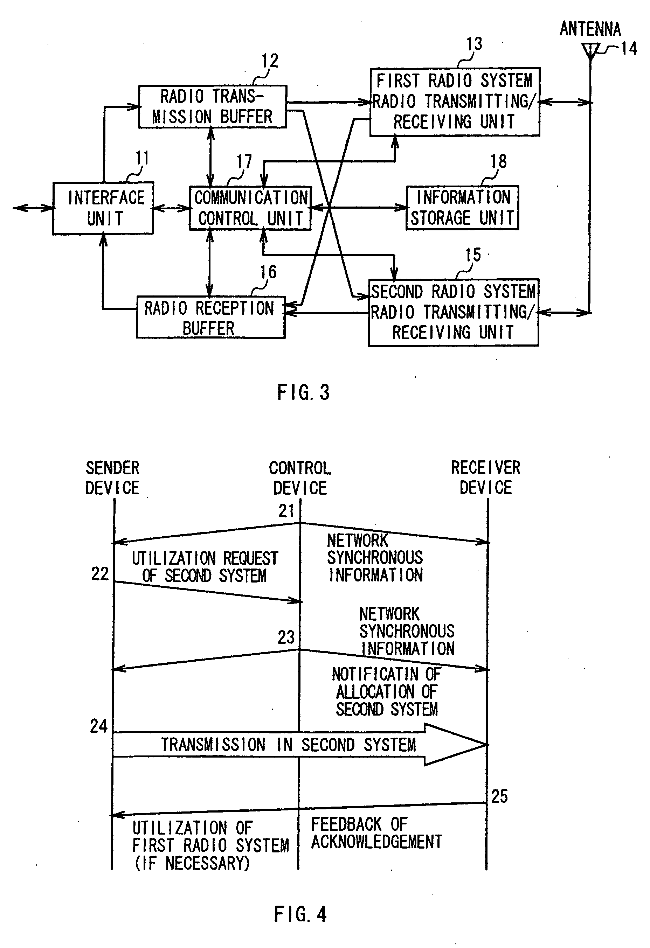

Fig. 3 is a block diagram showing the construction of a radio transmission device that works as a control station and a communication device concerning the embodiment 1 of this invention. In the radio transmission device shown in Fig. 3, an interface unit 11 exchanges audio information and video information with an externally connected AV device (not shown). The audio information and video information are stored in a radio transmission buffer 12.

A first communications system radio transmitting/receiving unit 13 modulates the audio information and video information that have been stored in the radio transmission buffer 12, into a signal which is to be transmitted via the first communications system, and also demodulates a signal transmitted via the first communications system, for example, a control signal transmitted from the control station of the first communications system.

Besides, a second communications system radio transmitting/receiving unit 15 modulates the audio information and video information that have been stored in the radio transmission buffer 12, into a signal which is to be transmitted via the second communications system, and also demodulates a signal transmitted via the second communications system.

This embodiment is explained for a case where the second communications system radio transmitting/receiving unit 15 performs both transmission and reception, however, this invention can be realized also in a case where it performs only one function of transmission and reception.

The first communications system radio transmitting/receiving unit 13 preferably exists in every communication device, however, in the case where the second communications system has a control station, only the control station may have the unit 13.

In addition, in the case where the second communications system has a control station, only the control station needs the first communications system radio transmitting/receiving unit 13 and the second communications system radio transmitting/receiving unit 15, and the other communication devices may have only the second communications system radio transmitting/receiving unit 15. In this case, the control station of the second communications system receives a beacon signal of the first communications system and notifies the other communication devices of the beacon signal as a beacon signal of the second communications system.

A signal that has been encoded by the first and the second radio transmitting/receiving units 13 and 15 is sent out to a medium via an antenna 14, and a signal from a medium is received via the antenna 14. For convenience, only one antenna is shown, but different antennae may be provided for the first communications system and the second communications system.

A radio reception buffer 16 stores information received by the first and the second communications system radio transmitting/receiving units 13 and 15. The information stored in the radio reception buffer 16 is outputted via the interface unit 11 to an externally connected AV device.

A communication control unit 17 performs an above-mentioned series of control. Besides, an information storage unit 18 stores the kind of a communications system to be used for transmission, the channel information, and various kinds of information about this device.

In the radio communications system employing the ultra wideband (UWB) signal, an information transmitter device multiplies information to be transmitted by a prescribed spreading code series to form spread information, uses an impulse signal obtained by changing a phase or subtle change in time according to the spread information, as a transmission signal, and an information receiver device identifies the information bit of the impulse signal based on the phase or the subtle change in time of the impulse, to obtain the desired information bit by despreading the information bit with the prescribed spreading code series.

Basically, ultra wideband communication (ultra wideband transmission method) performs baseband transmission using a signal comprising a series of pulses having a very narrow pulse width (for example, less than 1 ns (nanosecond)). In addition, its occupied bandwidth is a bandwidth of such a GHz order that a value obtained by dividing the occupied bandwidth by its central frequency (for example, between 1GHz and 10GHz) is almost one, and the bandwidth is extremely large as compared with a bandwidth used in the W-CDMA system, cdma 2000 system or a wireless LAN using SS (Spread Spectrum) or OFDM (Orthogonal Frequency Division Multiplexing).

In addition, the ultra wideband transmission method has such a feature that its low signal power density does not easily interfere with other radio systems, and is expected as a technique capable of overlying on the frequency bandwidth used by the existing radio system. Furthermore, the ultra wideband transmission method is hopeful as a technique for ultra high speed radio transmission at the level of 100 Mbps, using a personal area network (PAN) because of its wide band.

The embodiment of this invention explains about a case where the second communications system is a radio system using an ultra wideband signal. Note that, in this case, a radio system which performs communications employing a prescribed frame structure can be considered as the first communications system, like the radio system under the IEEE802.11 standards and the radio system under the IEEE802.15 standards.

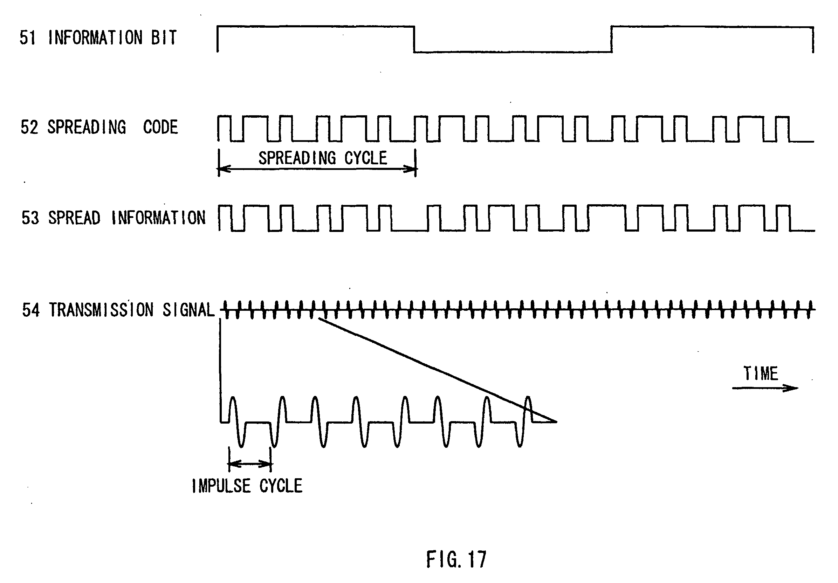

Fig. 17 is a figure showing an example of modulation processing of an ultra wideband signal which is performed by the second communications system transmitting/receiving unit 15 in a case where the communication device functions as an information transmitter. In Fig. 17, reference numeral 51 indicates an information bit to be transmitted, that is, the output of the radio transmission buffer 12. By multiplying this information bit 51 by a prescribed spreading code 52, spread information 53 is obtained. Then, an impulse is generated of which the phase changes with the 0/1 information of the spread information 53 and an ultra wideband transmission signal 54 is generated.

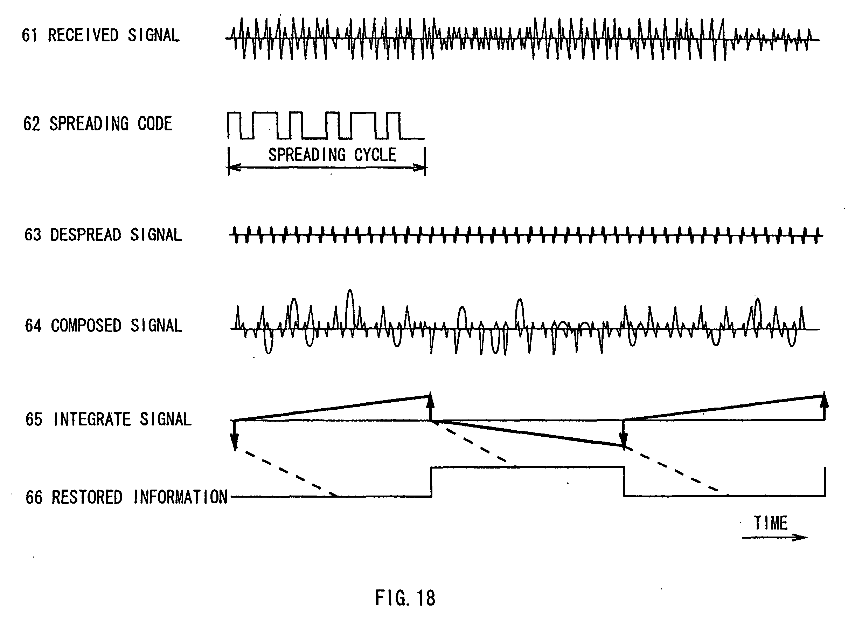

Fig. 18 is a drawing showing an example of demodulation processing of an ultra wideband signal which is performed by the second communications system transmitting/receiving unit 15 in a case where a communication device functions as an information receiver. Fig. 18 shows the despreading processing by the information receiver device. In Fig. 18, it is assumed that a received signal 61 composed of various components has been received via the antenna 14.

From this received signal 61, the second communications system transmitting/receiving unit 15 obtains a despread signal 63 based on the spreading code 62 the same as the spreading code used by the transmitter device. That is, an impulse of which the phase changes with the 0/1 information of the spreading code series which periodically continues on a prescribed information bit basis is formed, thereby generating a despread signal 63. Then, by sequentially multiplying the received signal 61 by the despread signal 63, a composed signal 64 is generated. And then, a signal component of the information bit length of the composed signal 64 is integrated by an integrating circuit or the like (in the same figure, see wave 65) to output restored information 66 as the most accurate value.

Note that, this embodiment uses the bi-phase modulation method using the change of the phase as the 0/1 information of the ultra wideband signal, as a modulation method, but for example, a pulse location modulation method can be applied, using a signal which has subtle different impulse generating timing based on the 0/1 information of the spread signal disclosed in the Japanese Patent Laid Open No. 508725/98.

Next explanation is about a radio transmission method of this invention using a radio communication device having the above construction.

Fig. 4 is a diagram showing a sequence for a case where the communication device 7 as the control station of the network shown in Fig. 1 performs the allocation of a transmission band of the second communications system that is used in transmission over the network shown in Fig. 2. The first communications system uses a frame structure under the time division for communication, and the control device (control station) periodically broadcasts Network synchronization information 21 existing in the header of the frame to the whole network. This Network synchronization information 21 is sent to the communication control unit 17 via the first communications system radio transmitting/receiving unit 13 in each communication device.

In a case where a certain communication device is to use the first communications system, it sends a utilization request 22 to the control station of the first communications system, needless to say. In a case where a certain communication device is to use the second communications system, on the other hand, the communication control unit 17 of this communication device transmits a utilization request 22 to the control station of the first communications system as an information transmitter device.

If the second communications system can be used, the control station notifies the information receiver device and information transmitter device of the allocation of the second communications system, with the Network synchronization information 23.

In the information transmitter device, the Network synchronization information 23 is sent to the communication control unit 17 via the first communications system radio transmitting/receiving unit 13. On the basis of scheduling information (region allocation information) that is included in the Network synchronization information 23, the communication control unit 17 causes the radio transmission buffer 12 to output information about the second communications system. The second communications system radio transmitting/receiving unit 15 reads out the information stored in the transmission buffer 12 and modulates it into a signal to be transmitted in the second communications system, thus performing transmission 24 to the information receiver device via the second communications system.

By the way, in a case where a feedback 25 of acknowledgement is required, such a process may be adopted that the information is sent from the information receiver device to the information transmitter device via the first communications system as necessary. This feedback signal is sent to the communication control unit 17 via the first communications system radio transmitting/receiving unit 13 of the information transmitter device.

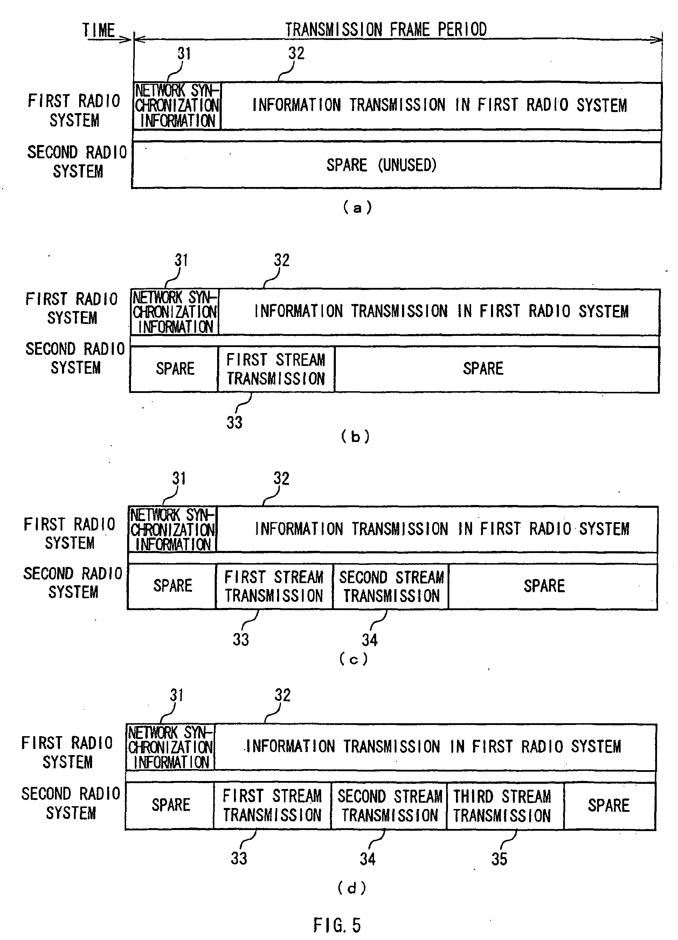

Figs. 5(a) - (d) are diagrams showing a frame format wherein transmission via the second communications system is adaptively added to the transmission via the first communications system. Now, such a case will be shown that a frame period is determined every fixed time and information is transmitted within the frame period by the time-division multiplexing as necessary.

Fig. 5(a) shows a frame format of a case where the second radio system is not used. As shown in this figure, the first communications system has such a configuration that Network synchronization information 31 is broadcasted from the control station every prescribed time. In addition, information transmission 32 in the first communications system is performed by the prescribed access control method. Besides, the whole region of the second communications system is treated as spare (unused) because transmission is not performed.

Fig. 5(b) shows a frame format of a case where information transmission is performed by using the second communications system. This figure represents such a state that only a region for first stream transmission 33 has been allocated, because the transmission line is time-division-multiplexed and used by allocating the transmission region for each link as necessary. Besides, a portion to which any region is not allocated in the second communications system is treated as spare (unused) because transmission is not performed.

Fig. 5(c) shows a frame format of a case where information is multiplexed and transmitted using the second communications system. This figure represents such a state that, in addition to the first stream transmission shown in Fig. 5(b), a region necessary for second stream transmission 34 has been allocated also for another stream transmission. Besides, a portion to which any region is not allocated in the second communications system is treated as spare because transmission is not performed.

Fig. 5(d) shows a frame format of a case where information transmission is further multiplexed and performed by using the second communications system. This figure represents such a state that, in addition to the first stream transmission 33 and the second stream transmission 34 shown in Fig. 5(c), a region necessary for third stream transmission 35 has been further allocated for another stream transmission. Besides, a portion to which any region is not allocated in the second communications system is treated as spare because transmission is not performed.

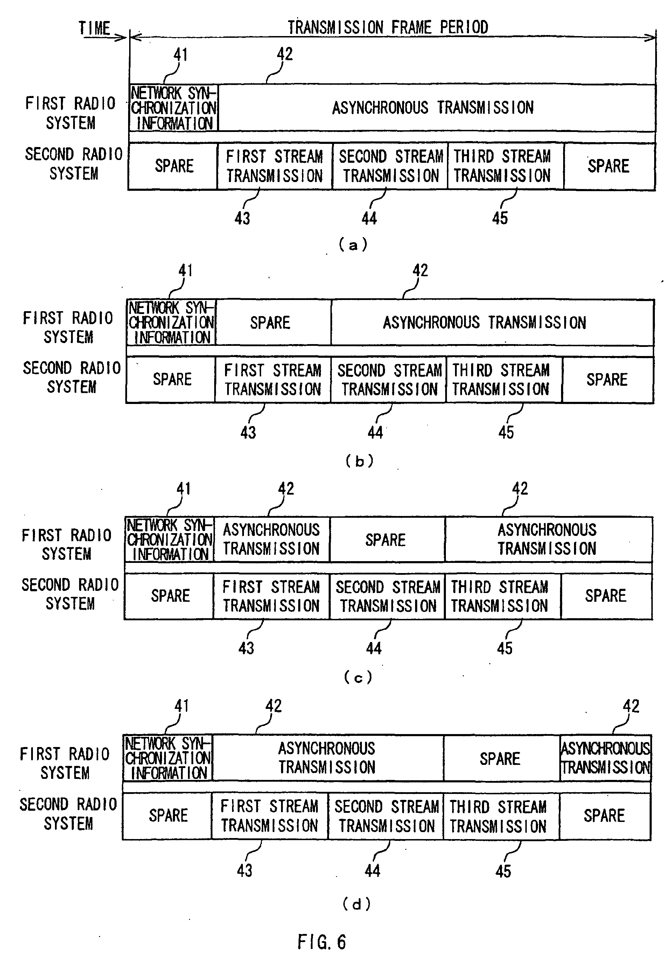

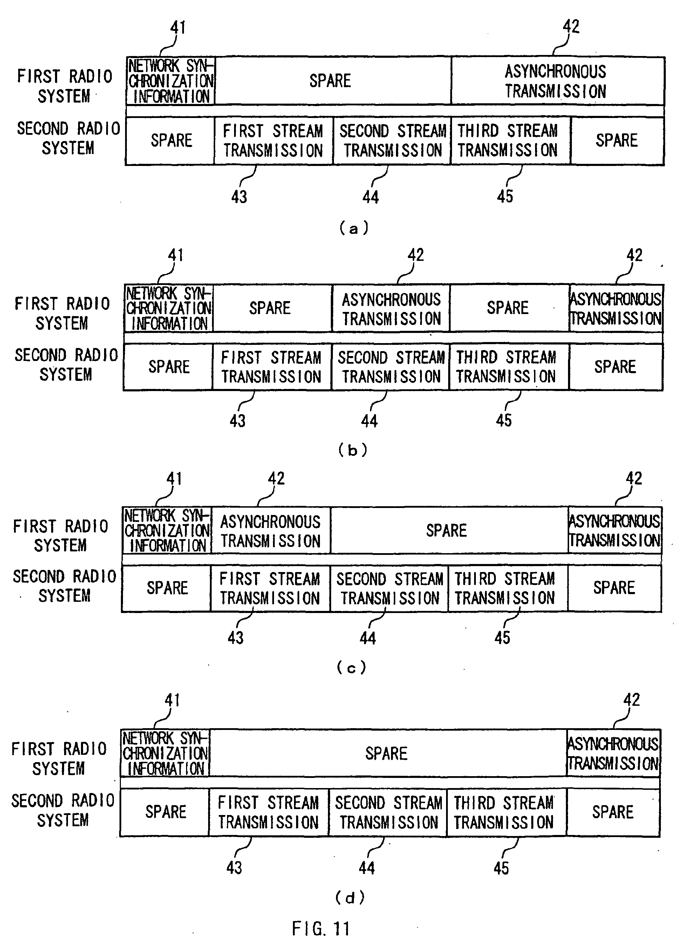

Figs. 6(a) - 6(d) and Figs. 11(a) - 11(d) are diagrams showing frame formats of a case where devices composing the network use the first communications system while the second communications system is used.

Fig. 6(a) shows an example of a case where the first communications system can be used in all regions while the second communications system is used for three stream transmissions. That is, in the first communications system, Network synchronization information 41 is transmitted in the header of the frame and asynchronous transmission 42 is performed in the other band. In the second communications system, the first stream transmission 43, the second stream transmission 44 and the third stream transmission 45 are performed during the asynchronous transmission period of the first communications system. This allows devices which are not using the second communications system to communicate with each other in the first communications system by using such a frame format.

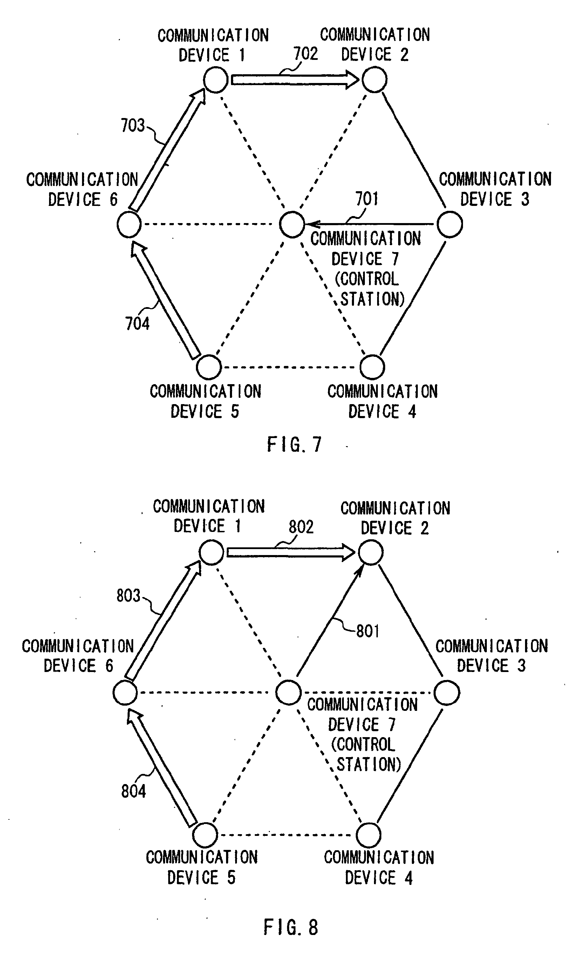

Fig. 7 shows an example of a case of using the first communications system with the frame format shown in the above Fig. 6(a). In this figure, a black arrow 701 represents information transmission in the first communications system and white arrows 702 - 704 represent information transmission using the second communications system. In the example shown in the figure, the first stream transmission 43 from the communication device 1 to the communication device 2 (the arrow 702), the second stream transmission 44 from the communication device 6 to the communication device 1 (the arrow 703), and the third stream transmission 45 from the communication device 5 to the communication device 6 (the arrow 704) are performed in sequence using the second communications system. On the other hand, the communication device 3 and the communication device (control station) 7 that do not use the second communications system during the asynchronous transmission period of the first communications system perform information transmission (the arrow 701) using the first communications system. The other region in the first communications system is treated as a spare region, and such control is performed that communications via the first communications system are not performed in the region that is used by the second communications system.

Fig. 6(b) shows an example of a case of, while the second communications system is used, allowing the utilization of the first communications system (asynchronous transmission 42) in the region other than the region (of time) when the first stream transmission 43 is performed. The region of the first communications system that corresponds to the first stream transmission 43 becomes a spare (unused) region, because if information transmission is performed in that region it is feared that reception of the first stream transmission may be disturbed. With such a frame format, the first communications system is used for a case where communication is performed to a device that is performing the first stream transmission 43 via the second communications system, or for a case where the first stream transmission 43 may be affected.

Fig. 8 shows an example of a case of using the first communications system with the frame format shown in the above Fig. 6(b). In this figure, a black arrow 801 represents information transmission using the first communications system, and white arrows 802 - 804 represent information transmission using the second radio system. In the example shown in the figure, the first stream transmission 43 from the communication device 1 to the communication device 2 (the arrow 802), the second stream transmission 44 from the communication device 6 to the communication device 1 (the arrow 803), and the third stream transmission 45 from the communication device 5 to the communication device 6 (the arrow 804) are performed in sequence, using the second communications system. On the other hand, the communication device (control station) 7 and the communication device 2, which do not use the second communications system during asynchronous transmission period 42 of the first communications system, perform information transmission (the arrow 801) using the first communications system. The other region in the first communications system is treated as a spare region, and such control is performed that communications in the first communications system are not performed within the region used by the second communications system.

Fig. 6(c) shows an example of a case of allowing the utilization of the first communications system (asynchronous transmission 42) in the region other than the region (of time) when the second stream transmission 44 is performed, while the second communications system is used. The region of the first communications system that corresponds to the second stream transmission 44 becomes a spare region, because if information transmission is performed in that region, it is feared that reception of the second stream transmission may be disturbed. With such a frame format, the first communications system is used for a case where communication is performed to a device that is performing the second stream transmission 44 in the second communications system, or for a case where the second stream transmission 44 may be affected.

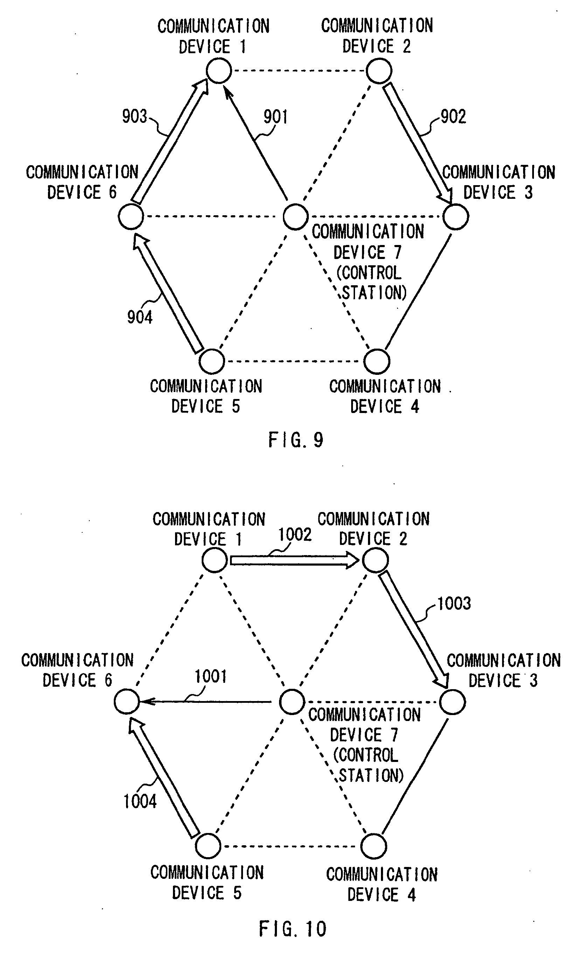

Fig. 9 shows an example of a case where the first communications system is used with the frame format shown in the above Fig. 6(c). In this figure, a black arrow 901 represents information transmission of the first communications system, and white arrows 902 - 904 represent information transmission that use the second communications system. In the example shown in the figure, the first stream transmission 43 from the communication device 2 to the communication device 3 (the arrow 902), the second stream transmission 44 from the communication device 6 to the communication device 1 (the arrow 903), and the third stream transmission 45 from the communication device 5 to the communication device 6 (the arrow 904) are performed in sequence, using the second communications system. On the other hand, the communication device (control station) 7 and the communication device 1, which do not use the second communications system during the asynchronous transmission period 42 of the first communications system, perform information transmission (the arrow 901) using the first communications system. The other region in the first communications system is treated as a spare region, and such control is performed that communications via the first communications system are not performed within the region that is being used by the second communications system.

Fig. 6(d) shows an example of a case of allowing the utilization of the first communications system (asynchronous transmission 42) in the region other than the region (of time) when the third stream transmission 45 is performed, while the second communications system is used. The region of the first communications system that corresponds to the third stream transmission 45 becomes a spare region, because if information transmission is performed in that region, it is feared that reception of the third stream transmission may be disturbed. With such a frame format, the first communications system is used for a case where communications are performed to a device that is performing the third stream transmission 45 in the second communications system, or for a case where the third stream transmission 45 may be affected.

Fig. 10 shows an example of a case of using the first communications system with the frame format shown in the above Fig. 6(d). In this figure, a black arrow 1001 represents information transmission of the first communications system, and white arrows 1002 - 1004 represent information transmission using the second communications system. In the example shown in the figure, the first stream transmission 43 from the communication device 1 to the communication device 2 (the arrow 1002), the second stream transmission 44 from the communication device 2 to the communication device 3 (the arrow 1003), and the third stream transmission 45 from the communication device 5 to the communication device 6 (the arrow 1004) are performed in sequence, using the second communications system. On the other hand, the communication device (control station) 7 and the communication device 6, which do not use the second communications system during the asynchronous transmission period 42 of the first communications system, perform information transmission (the arrow 1001) using the first communications system. The other region in the first communications system is treated as a spare region, and such control is performed that communications in the first communications system are not performed within the region that is used by,the second communications system.

Fig. 11(a) shows an example of a case of, while the second communications system is used, allowing the utilization of the first communications system (asynchronous transmission 42) in the region other than the region (of time) when the first stream transmission 43 and the second stream transmission 44 are performed. The regions of the first communications system that correspond to the first stream transmission 43 and the second stream transmission 44 become spare regions, because if information transmission is performed in these regions it is feared that reception of the first stream transmission and the second stream transmission may be disturbed. With such a frame format, the first communications system is used for a case where communications are performed to a device that is performing the first stream transmission 43 or the second stream transmission 44 via the second communications system, or for a case where the first stream transmission or the second stream transmission 44 is affected.

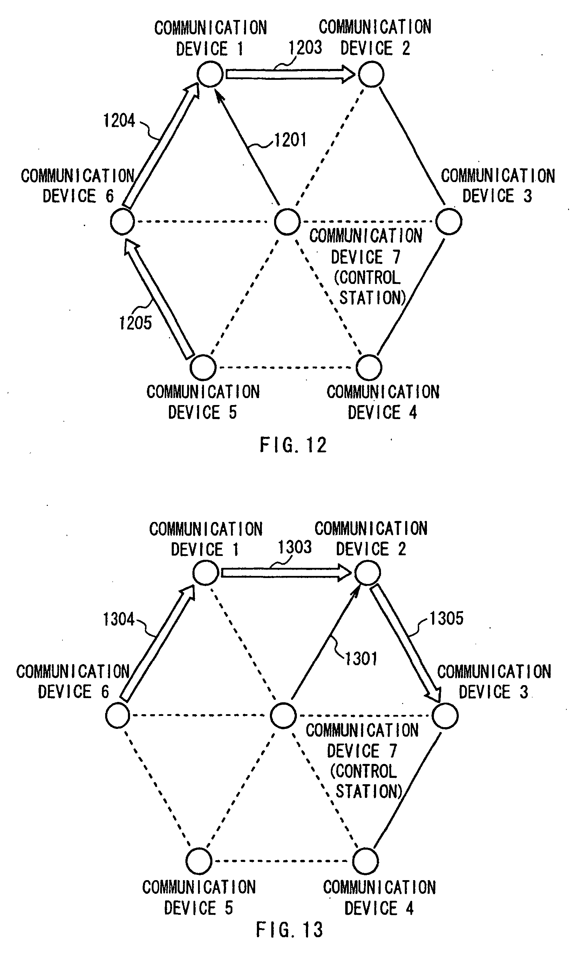

Fig. 12 shows an example of a case of using the first communications system with the frame format shown in the above Fig. 11(a). In this figure, black arrows 1201 represents information transmission in the first communications system, and white arrows 1203 - 1205 represent information transmission using the second communications system. In the example shown in the figure, the first stream transmission 43 from the communication device 1 to the communication device 2 (the arrow 1203), the second stream transmission 44 from the communication device 6 to the communication device 1 (the arrow 1204), and the third stream transmission 45 from the communication device 5 to the communication device 6 (the arrow 1205) are performed in sequence, using the second communications system. On the other hand, the communication device (control station) 7 and the communication device 1 which do not use the second communications system during the asynchronous transmission period 42 of the first communication system perform information transmission (the arrow 1201) using the first communications system. The other region in the first communications system is treated as a spare region, and such control is performed that communications via the first communications system are not performed within the region that is used by the second communications system.

Fig. 11(b) shows an example of a case of, when the second communications system is used, allowing the utilization of the first communications system (asynchronous transmission 42) within the region other than the region (of time) when the first stream transmission 43 and the third stream transmission 45 are performed. The regions of the first communications system that correspond to the first stream transmission 43 and the third stream transmission 45 become spare regions, because if information transmission is performed in these regions it is feared that reception of the first and third stream transmission may be disturbed. With such a frame format, the first communications system is used for a case where communications are performed to a device that is performing the first stream transmission 43 or the third stream transmission 45 via the second communications system, or for a case where the first stream transmission 43 or the third stream transmission 45 are affected.

Fig. 13 shows an example of a case of using the first communications system with the frame format shown in the above Fig. 11(b). In this figure, a black arrow 1301 represents information transmission in the first communications system, and white arrows 1303 - 1305 represent information transmission using the second communications system. In the example shown in the figure, the first stream transmission 43 from the communication device 1 to the communication device 2 (the arrow 1303), the second stream transmission 44 from the communication device 6 to the communication device 1 (the arrow 1304), and the third stream transmission 45 from the communication device 2 to the communication device 3 (the arrow 1305) are performed in sequence, using the second communications system. On the other hand, the communication device (control station) 7 and the communication device 2 which do not use the second communications system during the asynchronous transmission period 42 of the first communications system perform information transmission (the arrow 1301) using the first communications system. The other region in the first communications system is treated as a spare region, and such control is performed that communications via the first communications system are not performed within the region that is used by the second communications system.

Fig. 11(c) shows an example of a case of, when the second communications system is used, allowing the utilization of the first communications system (asynchronous transmission 42) in the region other than the region (of time) when the second stream transmission 44 and the third stream transmission 45 are performed. The regions of the first communications system that correspond to the second stream transmission 44 and the third stream transmission 45 become spare regions, because if information transmission is performed in these regions it is feared that reception of the second or the third stream transmission may be disturbed. With such a frame format, the first communications system is used for a case where communications are performed to a device that is performing the second stream transmission 44 or the third stream transmission 45 in the second communications system, or for a case where the second stream transmission 44 or the third stream transmission 45 may be affected.

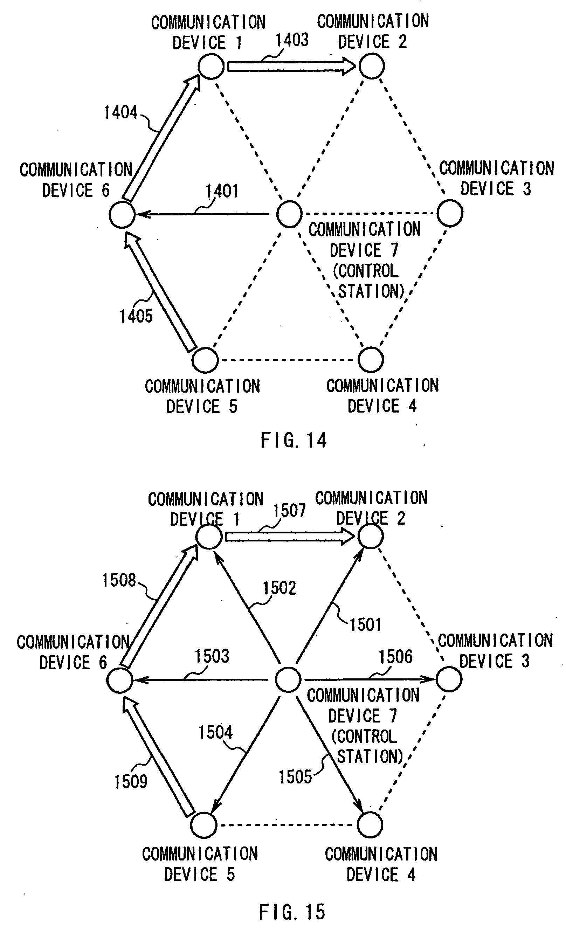

Fig. 14 shows an example of a case of using the first communications system with the frame format shown in the above Fig. 11(c). In this figure, a black arrow 1401 represents information transmission via the first communications system, and white arrows 1403 - 1405 represent information transmission using the second communications system. In the example shown in the figure, the first stream transmission 43 from the communication device 1 to the communication device 2 (the arrow 1403), the second stream transmission 44 from the communication device 6 to the communication device 1 (the arrow 1404), and the third stream transmission 45 from the communication device 5 to the communication device 6 (the arrow 1405) are performed in sequence using the second communications system. On the other hand, the communication device (control station) 7 and the communication device 6 which do not use the second communications system during the asynchronous transmission period 42 of the first communications system perform information transmission (the arrow 1401) using the first communications system. The other region of the first communications system is treated as a spare region, and such control is performed that communications via the first communications system are not performed within the region that is used by the second communications system.

Fig. 11(d) shows an example of a case of, when the second communications system is used, allowing the utilization of the first communications system in only the region other than the region (of time) when stream transmission is being performed. The regions of the first communications system that correspond to the stream transmission 43 - 45 become spare regions, because if information transmission is performed in these regions it is feared that reception of the second and the third stream transmission may be disturbed. With such a frame format, the first communications system is used for a case where communications are performed to a device that is performing stream transmission, or for a case where stream transmission is affected.

Fig. 15 shows an example of a case of using the first communications system with the frame format shown in the above Fig. 11(d). In this figure, black arrows 1501 - 1506 represent information transmission via the first communications system, and white arrows 1507 - 1509 represent information transmission using the second communications system. In the example shown in the figure, the first stream transmission 43 from the communication device 1 to the communication device 2 (the arrow 1507), the second stream transmission 44 from the communication device 6 to the communication device 1 (the arrow 1508), and the third stream transmission 45 from the communication device 5 to the communication device 6 (the arrow 1509) are performed in sequence using the second communications system. On the other hand, the information transmission (arrows 1501 - 1506) using the first communications system is performed in order to perform broadcast transmission from the communication device (control station) 7 which does not use the second communications system during the asynchronous transmission period 42 of the first communications system. The other region of the first communications system is treated as a spare region and such control is performed that communications via the first communications system are not performed within the region that is used by the second communications system.

As stated above, by controlling such that communications using the first communications system are not performed within a region that is used by the second communications system, it is able to prevent interference of both systems with each other. Besides, by performing control such that a device which possibly interferes with the communication within the region that is used by the second communications system is restrained from transmitting in this region, it is able to attempt coexistence of the second communications system and the first communications system.

Besides, by controlling such that a region that is periodically used by the first communications system, that is, a region in which the Network synchronization information is sent out is not allocated to the second communications system, it is able to interchange network information and to allow the second communications system to coexist.

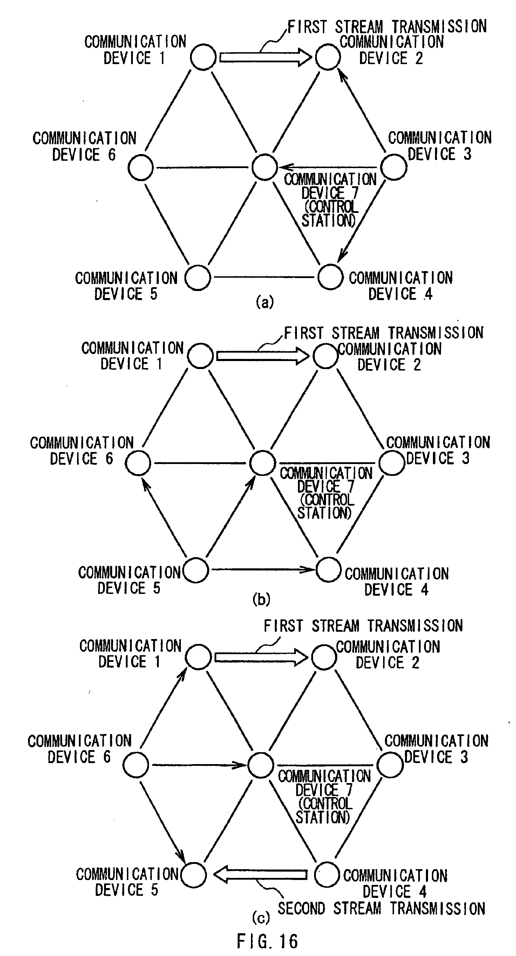

Fig. 16(a) is a diagram representing the utilization of the first communications system in the case where the second communications system is affected. This figure shows such a state where the communication device 1 performs the first stream transmission to the communication device 2 by using the second communications system.

In this case, information transmission (black arrows in the figure) by the communication device 3 may disturb the reception of the first stream transmission by the communication device 2 and therefore, such control is performed that information transmission using the first communications system is not performed while the first stream transmission is performed.

Fig. 16(b) is a diagram showing the utilization of the first communications system in a case where the second communications system is not affected. This figure shows a state where the communication device 1 performs the first stream transmission to the communication device 2 by using the second communications system.

In this case, there is no such a fear that information transmission (black arrows in the figure) by the communication device 5 disturbs the reception of the first stream transmission by the communication device 2 and therefore, information transmission using the first communications system can be performed while the first stream transmission is performed.

Fig. 16(c) is a diagram showing the utilization of the first communications system in a case where influences on the second communications system are considered individually. This figure shows such a state where the communication device 1 performs the first stream transmission to the communication device 2 by using the second communications system and the communication device 4 performs the second stream transmission to the communication device 5 by using the second communications system.

In this case, there is such a fear that information transmission (black arrows in the figure) by the communication device 6 disturbs the reception of the second stream transmission by the communication device 5 and therefore, such control is performed that information transmission using the first communications system is not performed while the second stream transmission is performed. On the other hand, because there is no such a fear that reception of the first stream transmission at the communication device 2 is disturbed, information transmission using the first communications system can be performed while the first stream transmission is performed.

In this connection, considering influences on the first stream transmission, such a process may be adopted that information transmission using the first communications system is preferentially performed within the third period in which both of the first stream transmission and the second stream transmission are not performed, and only in a case where the third region is insufficient, the information transmission is performed within the region in which the first stream transmission is performed.

As to the control of the information transmission shown in Fig. 5 - Fig. 16, the communication control unit 17 performs it on the basis of the Network synchronization information that is broadcasted.

As described above, a radio communications system is composed of the first communications system that is controlled by the control station and the second communications system that is different from the first communications system, and the radio communications system is controlled using the first communications system that is capable of two-way transmission, and communications between arbitrary communication stations or communications between a communication station and the control station are performed using the second communications system as necessary; therefore, it is able to control the radio network effectively by the use of the first communications system, and also is able to perform radio transmission efficiently using the second communications system.

By controlling the second communications system using the first communications system, it becomes possible to multiplex and transmit information to be transmitted via the second communications system.

Even in a case where an ultra wideband signal is employed, because the radio communications system is composed of the first communications system of which the network is controlled by the control device and the second communications system having a different network formation from the first communications system, and the first communications system that is capable of two-way transmission is used for controlling the second communications system, and information transmission between arbitrary communication devices or between a communication station and the control station is performed using the second communications system as necessary, it is able to control the radio network effectively by using the first communications system, and also able to perform radio transmission efficiently by using the second communications system.

Besides, in the first communications system, even though a signal based on the conventional radio transmission method is being used in the identical space, it is able to perform information transmission while diminishing the mutual influences. That is, it is able to cause the second communications system to work, without counteracting the operation of the first communications system.

In a radio transmission method and a radio transmission device of the present invention, it is able to use a radio system based on IEEE802. 11 like a wireless LAN or a radio system based on IEEE802. 15 like Bluetooth, as the first communications system. Thereby, it is able to employ the existing protocol so as to control the radio transmitting/receiving unit of the first communications system, and also able to employ chips on the market, therefore, it is able to compose the whole system inexpensively.

### Industrial Applicability

The radio communications system, control station, communication device, communication control method, radio communication method and communication control program of the present invention is applied to a radio communications system comprising a small-scale radio network having a control station and a small-scale network without a control station, for example.

## Claims

1. A radio communications system comprising a first radio system and a second radio system different from said first communications system, wherein
a control station of said first radio system controls communications of communication devices belonging to said second communications system, with a control signal of said first communications system.

2. The radio communications system according to Claim 1, wherein
said control station controls the communications of said communication devices belonging to said second communications system, with said control signal of said first communications system, so as to avoid collision between two communications via said first and second communications systems to one of said communication devices.

3. The radio communications system according to Claim 1, wherein
a part of said communication devices comprises second communications system control means for controlling the communications of said communication devices belonging to said second communications system, via said second communications system.

4. The radio communications system according to Claim 3, wherein:
said control station transmits said control signal of said first communications system to a communication device having said second communications system control means; and
the communication device having said second communications system control means transmits said control signal received of said first communications system to a plurality of said communication devices via said second communications system.

5. The radio communications system according to Claim 1, wherein
said first communications system and said second radio system have different physical layers.

6. The radio communications system according to Claim 1, wherein
said first communications system and said second radio system use different signal waveforms.

7. The radio communications system according to Claim 1, wherein
said first communications system and said second radio system have different transmission bandwidths.

8. A control station of a first radio communications system in a radio communications system comprising said first radio system and a second radio system different from said first radio system, wherein
said control station controls communications of said communication devices belonging to said second communications system, with a control signal of said first communications system.

9. The control station according to Claim 8, wherein
said control station seizes the communication status of said second radio system to determine whether information transmission using said first radio system is performed.

10. A communication device capable of accessing a first communications system of which the network is controlled by a control station and a second communications system having a different network formation from said first communications system, said communication device comprising:
channel-allocation requesting means for transmitting a channel-allocation request for said second communications system to said control station on the basis of network information given from said control station which controls said first communications system;
receiving means for receiving allocated-channel information of said second communications system allocated by said control station in response to said channel-allocation request; and
transmitting means for performing information transmission via said second communications system based on said allocated-channel information.

11. The communication device according to Claim 10, wherein
said first communications system is a radio system for performing communications employing a prescribed frame structure, and said second communications system is a radio system employing an ultra wideband signal.

12. A communication device capable of accessing a first communications system of which the network is controlled by a control station and a second communications system having a different network formation from said first communications system, said communication device comprising:
first communication means for performing communications via said first communications system;
second communication means for performing communications via said second communications system; and
transmission control means for receiving network information transmitted from said control station which controls said first communications system, via said first communication means, and performing information transmission via said second communications system based on the network information.

13. The communication device according to Claim 12, further comprising
control means for said second communications system.

14. A communication control method of a control station of a first radio communications system in a radio communications system comprising said first radio system and a second radio system different from said first radio system, said communication control method comprising:
a step of receiving a channel-allocation request from a communication device belonging to said second radio communications system;
a step of searching for available channels in response to said channel-allocation request; and
a step of giving a notice of allocated-channel information of said second radio communications system obtained by the search, via said first radio system.

15. The communication control method according to Claim 14, wherein
said allocated-channel information is to allocate to said second communications system a time region other than the time region which periodically allocated to said first communications system.

16. The communication control method according to Claim 14, wherein
said first communications system is used within the time region other than the time region allocated to said second communications system.

17. The communication control method according to Claim 14, wherein
in a case of performing communications via said first communications system to said communication device performing communications via said second communications system, control is performed so that the communications via said first communications system does not disturb the communications via said second communications system.

18. The communication control method according to Claim 14, wherein
said second radio system is used for arbitrary-way communications.

19. The communication control method according to Claim 14, wherein
said first communications system is a radio system for performing communications employing a prescribed frame structure and said second communications system is a radio system employing an ultra wideband signal.

20. A communication control method of a control station of a second radio communications system in a radio communications system comprising a first radio system and said second radio system different from said first radio system, said communication control method comprising:
a step of receiving allocated-channel information of said second radio communications system given from a control station of said first radio communications system via said first radio communications system; and
a step of giving a notice of said allocated-channel information received, to a plurality of communication devices via said second radio communications system.

21. A radio communication method for performing communications between communication devices in first and second radio systems by using said first radio system of which the network is controlled by a control station and said second radio system having a different network formation from said fist radio system, said radio communication method comprising:
a step at which said control station gives a notice of network information to said communication devices via said first communications system; and
a step at which said communication devices perform information transmission via said second communications system based on said network information.

22. A communication control program of a control station of a first radio communications system in a radio communications system comprising said first radio system and a second radio system different from said first radio system, said communication control program comprising:
a step of receiving a channel-allocation request from a communication device belonging to said second radio communications system;
a step of searching for available channels in response to said channel-allocation request; and
a step of giving a notice of allocated-channel information of said second radio communications system obtained by the search, via said first radio system.

23. A communication control program of a control station of a second radio communications system in a radio communications system comprising a first radio system and said second radio system different from said fist radio system, said communication control program comprising:
a step of receiving allocated-channel information of said second radio communications system given from the control station of said first radio communications system via said first radio communications system; and
a step of giving a notice of said allocated-channel information received, to a plurality of communication devices via said second radio communications system.
